# DEMANDE DE BREVET EUROPEEN

(11) **EP 2 014 443 A1**
(43) Date de publication de la demande: **14.01.2009**
(21) Numéro de dépôt: 08103944.8
(22) Date de dépôt: 14.05.2008
(51) Int. Cl.: B29C 49/16, B29C 49/78, B29C 49/06

(54) **Procédé de fabrication par soufflage de corps creux en matière plastique, dispositif et installation pour sa mise en oeuvre**

(30) Priorité: 14.05.2007 FR 0703427
(71) Demandeur: Dixi Processing, 74200 Armoy (FR)
(72) Inventeur: Poncet, Dominique, 74200 Armoy (FR)
(74) Mandataire: Croonenbroek, Thomas Jakob

(57) **Abrégé**

L'invention concerne un procédé de fabrication par soufflage de corps creux en matière plastique dans un moule à partir d'une préforme (7) comportant les étapes suivantes :
- lors d'une première étape de présoufflage (106), on insuffle du gaz dans la préforme à une première pression,
- lors d'une seconde étape de soufflage (108), on insuffle du gaz dans la préforme à une seconde pression supérieure à la première pression pour obtenir le corps creux, et
- lors d'une troisième étape de dégazage (110) du corps creux, on récupère le gaz qui a été soufflé dans l'ébauche à la seconde pression lors de la seconde étape de soufflage,

caractérisé en ce que l'on comprime le gaz récupéré en vue de son utilisation lors d'une étape de soufflage ultérieure. L'invention concerne également un dispositif et une installation pour la mise en oeuvre du procédé.

## Description

La présente invention concerne un procédé de fabrication par soufflage de corps creux en matière plastique, en particulier des récipients tels que des flacons ou bouteilles, un dispositif de récupération de gaz de soufflage et une installation pour la mise en oeuvre du procédé.

La fabrication de corps creux comme par exemple des bouteilles en matière plastique tel que le polyéthylène téréphthalate (PET) ou le polyéthylène naphtalate (PEN) se réalise généralement à partir d'une ébauche ou une préforme de petite taille qui est placée dans un moule de soufflage.

Une fois la préforme placée dans le moule, on distingue deux phases de soufflage pour obtenir le corps creux fini, une première phase de présoufflage et une phase de soufflage.

Lors de la phase de présoufflage, on insuffle de l'air comprimé avec une pression aux alentours de 15 bars dans la préforme dans le moule ce qui a pour effet une expansion de celle-ci jusqu'à la matière de la préforme épouse la paroi du moule.

Puis lors de la phase de soufflage, de l'air comprimé avec une pression d'environ 40 bars est insufflé dans le moule pour plaquer la matière plastique contre la paroi du moule et pour obtenir ainsi le récipient fini.

Une problématique récurrente des installations de fabrication de corps creux réside dans la forte consommation d'énergie et d'air de soufflage, ainsi qu'une usure importante des compresseurs capables d'obtenir les pressions élevées d'environ 40 bars, ceci à des cadences de fabrication pouvant atteindre 1600 récipients / moule /heure.

En effet, pour obtenir ces pressions élevées, la consommation d'air pour un récipient d'environ 1 litre est de l'ordre de 40 litres. L'air de soufflage et de présoufflage doit être traité avant d'être insufflé dans l'installation, en particulier il doit être sec, déshuilé et exempte de particules comme par exemple des poussières ou autres. Or, en général, une fois que le soufflage du récipient est achevé, l'air ainsi traité est relâché dans l'environnement ce qui est un gaspillage aussi bien en énergie nécessaire pour le traitement de l'air environnant qu'en filtres et autres consommables nécessaires pour obtenir un air sec de bonne qualité pour le soufflage et le présoufflage.

De plus, les compresseurs permettant d'obtenir des hautes pressions d'environ 40 bars sont très coûteux, encombrants et soumis à une forte usure due à ces pressions élevées. Une maintenance très régulière est nécessaire pour assurer le bon fonctionnement des installations de fabrication. Or, chaque intervention de maintenance nécessite un arrêt prolongé de l'installation, nuisant ainsi au rendement global de l'installation en diminuant le nombre de récipients fabriqués par exemple sur une période de plusieurs mois.

Pour réduire la consommation d'air de soufflage, il existe des installations présentant des dispositifs de récupération d'air soufflé après la phase de soufflage. On cite par exemple les documents WO 03/ 009993, EP 0 039 929, EP 0 655 313, US 5,173,241.

Généralement, la récupération d'air de soufflage se traduit par exemple par une injection de l'air récupéré dans un circuit d'air basse pression par exemple pour une utilisation lors du présoufflage, pour l'actionnement de divers vérins de l'installation ou pour d'autres utilisations étrangères à l'installation de fabrication de récipients.

Bien que ces installations connues permettent d'obtenir une récupération partielle d'air de soufflage et une première optimisation énergétique, la consommation d'énergie globale reste toutefois élevée et l'usure des compresseurs ne peut être contenue efficacement.

La présente invention vise à optimiser la récupération d'air de soufflage et son utilisation dans l'installation en vu de réduire à la fois la consommation énergétique, la consommation d'air de soufflage et l'usure des compresseurs.

A cet effet, l'invention a pour objet un procédé de fabrication par soufflage de corps creux en matière plastique dans un moule à partir d'une préforme comportant les étapes suivantes :
- lors d'une première étape de présoufflage, on insuffle du gaz dans la préforme à une première pression,
- lors d'une seconde étape de soufflage, on insuffle du gaz dans la préforme à une seconde pression supérieure à la première pression pour obtenir le corps creux, et
- lors d'une troisième étape de dégazage du corps creux, on récupère le gaz qui a été soufflé dans l'ébauche à la seconde pression lors de la seconde étape de soufflage,
caractérisé en ce que l'on comprime le gaz récupéré en vue de son utilisation lors d'une étape de soufflage ultérieure.

Le procédé selon l'invention peut comporter une ou plusieurs des caractéristiques suivantes :
- le gaz récupéré et comprimé est utilisé pour amorcer la compression d'un volume de gaz à la seconde pression en agissant sur un piston d'un dispositif de récupération de gaz de soufflage lors d'une phase d'accélération de manière à accompagner dans une phase initiale une unité motorisée du dispositif de récupération dans son effort de compression,
- on comprime le gaz récupéré à une pression supérieure à la seconde pression de soufflage, de préférence à une pression supérieure à 40 bars, préférentiellement comprise entre 45bars et 54bars, avant de l'utiliser pour une nouvelle étape de soufflage,
- avant la compression du gaz récupéré, on fait l'appoint en gaz depuis une source de gaz comprimé pour obtenir la quantité de gaz nécessaire pour réaliser une phase de soufflage,
- la source de gaz comprimé pour faire l'appoint fournit un gaz à une pression égale ou supérieure d'au plus de 10 bars à la pression nécessaire pour l'étape de présoufflage, de préférence à une pression comprise entre 10 bars et 15 bars.

L'invention a également pour objet un dispositif de récupération de gaz de soufflage destiné à être monté dans un circuit de circulation de gaz de présoufflage / soufflage d'une installation de fabrication par soufflage de corps creux en matière plastique dans un moule à partir d'une préforme, caractérisé en ce qu'il comprend une première et une seconde chambres de récupération / compression séparées par un piston mobile et apte à être entraîné par une unité motorisée, chaque chambre étant destinée à être reliée via une conduite de circulation de gaz au moule pour permettre en alternance dans les deux chambres d'une part la récupération du gaz de soufflage lors de l'étape de dégazage et d'autre part la compression du gaz récupéré en vue de son utilisation lors d'une étape de soufflage.

Le dispositif selon l'invention peut comporter une ou plusieurs des caractéristiques suivantes :
- les chambres de récupération / compression sont formées entre une paroi externe d'un tube intérieur mobile en translation et portant le piston de forme annulaire et la paroi interne d'un tube extérieur,
- l'unité motorisée comprend un mécanisme à vis sans fin entraînant ledit tube intérieur,
- ledit mécanisme à vis sans fin comprend une partie filetée portée par ledit tube intérieur et en prise avec une vis sans fin reliée en entraînement avec un moteur.
Enfin, l'invention a pour objet une installation de fabrication par soufflage de corps creux en matière plastique dans un moule à partir d'une préforme, caractérisé en ce qu'il comprend un dispositif de récupération tel que défini ci-dessus.

Cette installation peut en outre comprendre une source de gaz comprimé fournissant un gaz à une pression inférieur à la pression nécessaire pour l'étape de soufflage, de préférence à une pression comprise entre 10 bars et 15 bars en vue de réaliser d'une part l'étape de présoufflage et d'autre part pour faire l'appoint en quantité de gaz du dispositif de récupération de gaz de soufflage.

D'autres avantages et caractéristiques apparaîtront à la lecture de la description de l'invention, ainsi que des figures suivantes sur lesquelles :
- la figure 1 est un schéma d'un premier mode de réalisation d'une installation de fabrication par soufflage d'un corps creux en matière plastique comportant d'une part un dispositif de récupération de gaz de soufflage et d'autre part un compresseur haute pression de 40bars environ,
- la figure 2 est une vue en coupe transversale d'un dispositif de récupération de gaz de soufflage,
- la figure 3 est un diagramme montrant l'évolution de diverses pressions de l'installation de la figure 1 pour illustrer le procédé selon l'invention,
- les figures 4A, 4B, 4C et 4D montrent le dispositif de récupération de gaz de soufflage dans diverses positions selon une vue en coupe transversale comme celle de la figure 2,
- la figure 5 est un schéma d'un second mode de réalisation d'une installation de fabrication par soufflage d'un corps creux en utilisant seulement un compresseur basse pression de 15 bars environ, et
- la figure 6 est un diagramme montrant l'évolution de diverses pressions de l'installation de la figure 5 pour illustrer le procédé selon l'invention.

Sur toutes les figures, les éléments identiques portent les mêmes numéros de référence. De plus, toutes les vannes de régulation des fluides dans l'installation sont des vannes commandées à distance et admettant, par exemple par des moyens anti-retour (clapet anti-retour) uniquement un seul sens de circulation ce qui est indiqué par la direction d'une flèche simple « → », ou admettant les deux sens de circulation ce qui est indiqué par une double flèche « ←→ ».

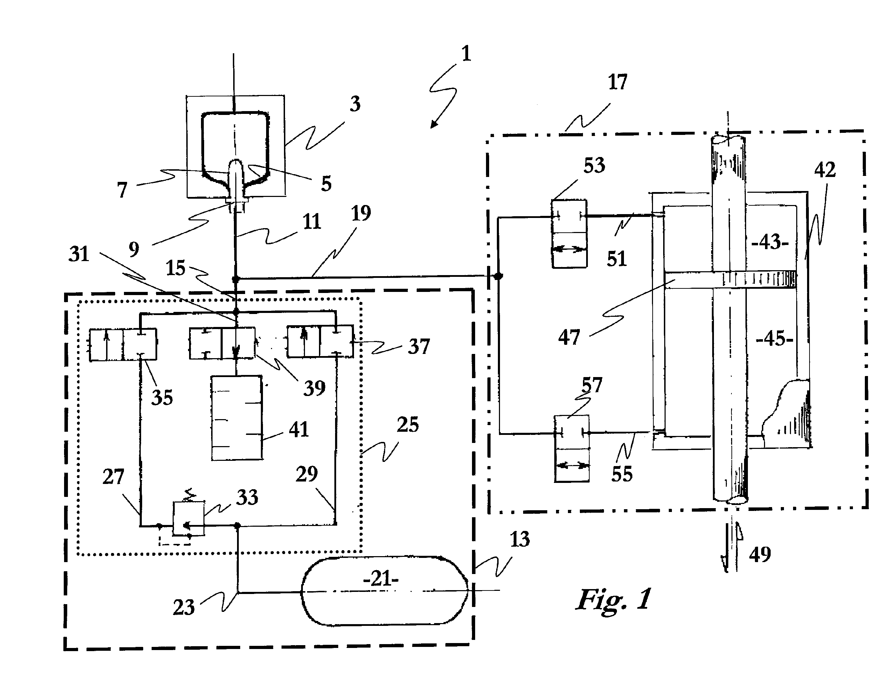

La figure 1 montre un schéma d'une installation 1 de fabrication par soufflage d'un corps creux en matière plastique.

Cette installation comporte un moule 3 dont les parois internes 5 sont conformées pour la réalisation d'un corps creux, tel qu'un récipient comme par exemple une bouteille ou un flacon en matière plastique. De façon générale et sans effet limitatif, on peut prévoir des moules pour la fabrication de bouteilles ayant une contenance de 0,51, 11, 1,51, 51 ou 101.

Sur le schéma de la figure 1, un seul moule 3 est représenté, mais bien entendu, on peut prévoir sur une installation plusieurs moules branchés et alimentés en parallèle en gaz de soufflage / présoufflage sans sortir du cadre de la présente invention.

A l'entrée du moule est placée une préforme ou ébauche 7. Cette préforme est placée sur des moyens d'étanchéité 9 connus en soi (par exemple une tuyère), reliés à une conduite principale 11 de circulation d'un gaz de présoufflage / soufflage, comme par exemple de l'air traité, c'est-à-dire l'air dépoussiéré, séché et déshuilé, afin de pouvoir introduire le gaz de présoufflage / soufflage à l'intérieur de la préforme 7.

La conduite principale 11 est reliée d'une part à un bloc 13 d'alimentation en gaz et de dégazage via une conduite 15 d'alimentation et de dégazage et d'autre part au dispositif 17 de récupération de gaz de soufflage via une conduite 19 de récupération et de soufflage.

Par « bloc d'alimentation en gaz et de dégazage », on désigne un ensemble fonctionnel d'éléments de l'installation (conduites / canalisations de gaz et vannes de régulation) permettant de réaliser les fonctions d'alimentation en gaz et de dégazage sans que ces éléments doivent nécessairement être installés sur un même bâti.

Ce bloc 13 est connu en soi et comporte un compresseur haute pression 21 du gaz de présoufflage / soufflage, c'est-à-dire un compresseur capable de délivrer une pression d'environ 40bars pour pouvoir réaliser une étape de soufflage, comme cela sera décrit plus loin.

Ce compresseur 21 est relié via une conduite de sortie 23 à une unité 25 de régulation de pressions dont la sortie est reliée à la conduite 15 d'alimentation et de dégazage.

L'unité 25 est composée essentiellement de trois conduites en parallèles, à savoir une conduite de présoufflage 27 dont l'entrée est reliée à la conduite 23 et la sortie à la conduite 15, une conduite de soufflage 29 dont l'entrée est également reliée à la conduite 23 et la sortie à la conduite 15 et enfin une conduite 31 de dégazage dont l'entrée est reliée à la conduite 15.

Dans la conduite de présoufflage 27 sont disposés en série d'une part un régulateur de pression de présoufflage 33, par exemple un détendeur, qui a pour fonction de réduire la pression d'environ 40 bars en sortie du compresseur 21 à une pression de présoufflage comprise entre 10bars et 15bars environ, pour permettre une étape de présoufflage, et d'autre part une vanne 35 de présoufflage.

La conduite de soufflage 29 comporte une vanne 37 de soufflage.

Enfin, dans la conduite de dégazage 31 sont disposés en série une vanne de dégazage 39 et un silencieux de dégazage 41, c'est-à-dire un élément permettant de détendre un gaz à une pression élevée vers une pression atmosphérique et disposant de moyens de réduction du bruit généré par la détente. La vanne 39 permet la circulation de fluide seulement en direction du silencieux 41.

Comme on le voit sur la figure 1, le dispositif 17 de récupération du gaz de soufflage est branché avec sa conduite 19 directement sur la conduite principale 11 de l'installation. Ceci a pour avantage que le dispositif selon l'invention peut être adapté facilement à toute installation connue sans nécessiter des modifications importantes sur les conduites de gaz existantes.

Le dispositif 17 comprend dans un carter 42 une première 43 et une seconde 45 chambres de récupération / compression de gaz de soufflage, séparées par un piston mobile 47 (mouvement en va-et-vient indiqué par les flèches 49).

Pour brancher les chambres 43 et 45 à la conduite 19, cette dernière se divise en un premier branchement 51 comportant une vanne 53 de régulation « récupération - soufflage » et relié à la première chambre 43, et en un second branchement 55 comportant une vanne 57 de régulation « récupération - soufflage » et relié à la seconde chambre 45.

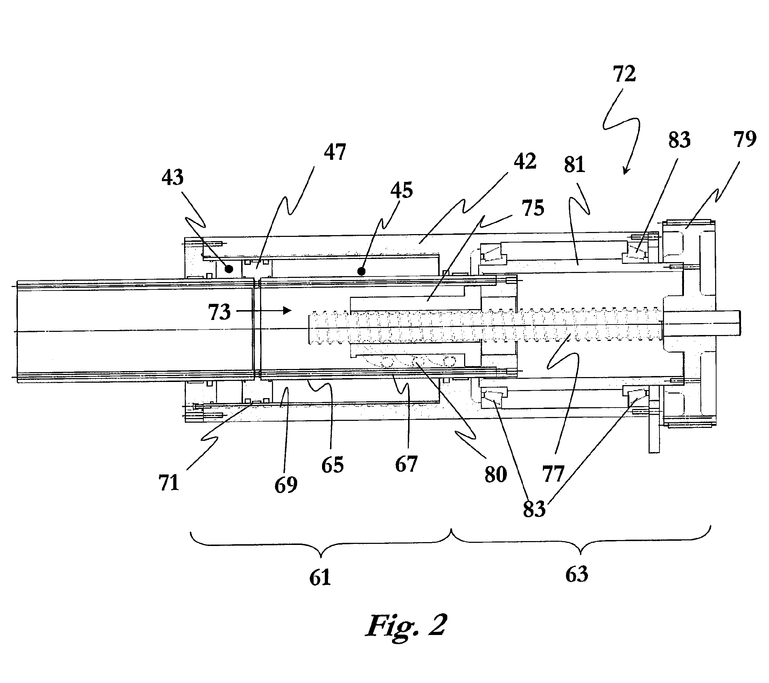

La représentation du dispositif 17 sur la figure 1 n'est que schématique. On se réfère maintenant à la figure 2 montrant une vue en coupe longitudinale montrant la partie principale du dispositif selon l'invention pour une description plus détaillée de sa structure.

Le carter 42 est réalisé sous forme d'un tube extérieur avec une partie 61 présentant les deux chambres 43 et 47 et dédiée plus spécifiquement à la récupération des gaz de soufflage et leur compression, et une partie 63 dédiée plus spécifiquement à l'entraînement du piston 47.

Dans la partie 61 les chambres 43 et 45 de récupération / décompression / compression sont formées entre une paroi externe 65 d'un tube intérieur 67 (diamètre environ 200 mm à titre d'exemple) portant le piston 47 et la paroi interne 69 du carter 42 (diamètre environ 280mm à titre d'exemple) considéré comme un tube extérieur.

Le piston 47 possède une forme annulaire et dispose de moyens d'étanchéité 71 afin de séparer les deux chambres 43 et 45 dont le volume est donc variable en fonction de la position du piston 47.

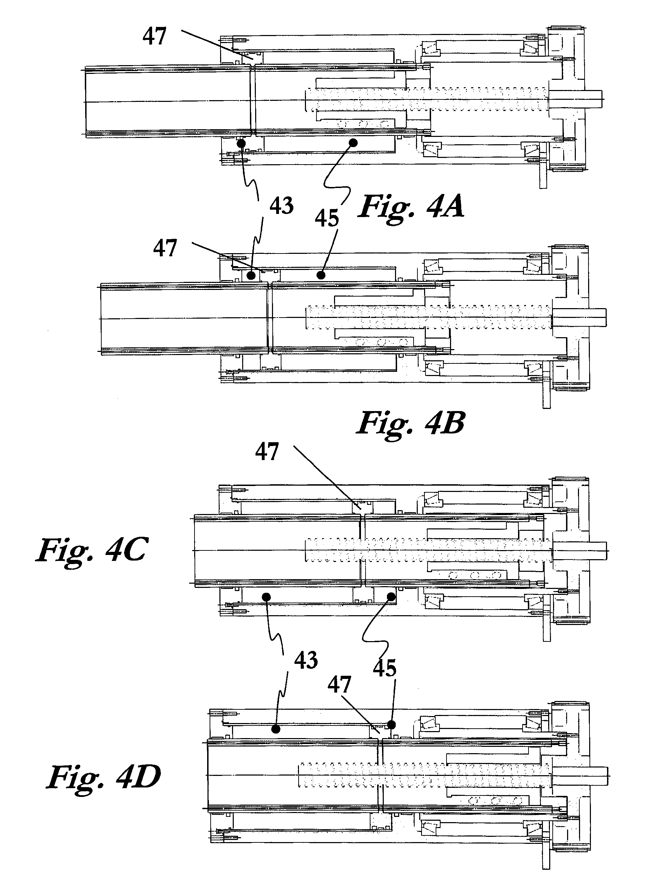

Le tube intérieur 67 et par conséquent le piston 47 sont mobiles en translation, à titre d'exemple de 370mm environ, ceci entre deux positions de fin de course illustrées sur les figures 4A et 4D correspondant respectivement à un volume minimal pour la chambre 43 et donc maximal (12 litres environ à titre d'exemple) pour la chambre 45 (fig. 4A) et à un volume maximal pour la chambre 43 et donc minimal pour la chambre 45 (fig. 4D).

Le déplacement du tube intérieur 67 est réalisé par une unité motorisée 72 comportant un mécanisme 73 à vis sans fin dont une partie filetée 75 est portée par ledit tube intérieur 67 et est en prise avec une vis sans fin 77 reliée en entraînement avec un moteur électrique (non représenté) via une roue dentée 79 et une courroie de transmission (non représentée). Avantageusement, il s'agit d'un mécanisme avec une circulation de billes dont les conduits 80 sont représentés schématiquement. Grâce à la réalisation des chambres 43 et 45 entre deux tubes comme décrit ci-dessus, le dispositif 17 est très compact, ce qui facilite son montage sur des installations existantes de fabrication par soufflage de corps creux en matière plastique.

La partie 63 montre que la vis sans fin 77 et la roue dentée 79 sont reliées l'une à l'autre et portée en rotation par un tube de support 81 vissé sur la roue dentée 79 et supporté en rotation par des roulements 83.

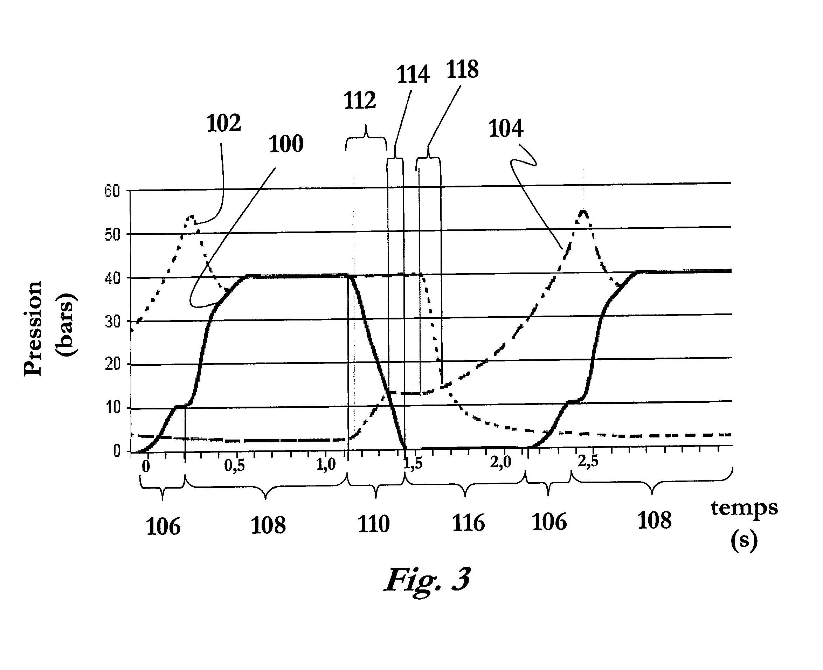

Le fonctionnement de l'installation 1 de la figure 1 incorporant un dispositif 17 tel que représenté en partie à la figure 2 sera maintenant décrit en relation d'une part avec la figure 3 montrant sur un même schéma la pression régnant à l'intérieur de la préforme 7 s'étirant pour adopter la forme du corps creux définitif à réaliser (courbe 100 en plein), et les pressions régnant à l'intérieur des chambres 43 (courbe 102 en trait pointillés) et 45 (courbe 104 avec traits et points en alternance) lors d'un cycle de fabrication et d'autre part en relation avec les figures 4A, 4B, 4C et 4D montrant diverses positions du dispositif 17 de récupération.

La description d'un cycle commence au moment où une préforme 7 est placée à l'intérieur du moule 3 et celui-ci est fermé. Pendant tout le cycle de fabrication, le compresseur 21 fonctionne de façon continue et est considéré comme une source de gaz à une pression constante de 40 bars environ.

Alors que les vannes 37 et 39, ainsi que 53 et 57 sont fermées, la vanne 35 s'ouvre pour réaliser une étape de présoufflage 106 d'une durée environ de 0,25s pendant laquelle on insuffle le gaz à une première pression d'environ 10bars dans la préforme 7 possédant une température permettant la déformation plastique s'étire dans le moule pour se plaquer contre les parois 5.

Au même moment, le piston 47 entraîné par son unité motorisée 72 comprime le gaz de soufflage récupéré dans la chambre 43 à une pression supérieure à la pression de soufflage (environ 40 bars), de préférence à une pression supérieure à 40 bars, préférentiellement comprise entre 45bars et 54bars. Ceci a également pour effet d'agrandir le volume de la chambre 45 pour préparer celle-ci à récupérer le gaz de soufflage lors de l'étape de dégazage (décrite plus loin). La pression régnant dans cette chambre 45 est de qq. bars seulement lors de cette étape 106.

Il est avantageux de comprimer le gaz récupéré à une pression supérieure à celle nécessaire pour le soufflage pour augmenter le rendement de l'installation selon l'invention.

Comme on le voit sur la figure 3, la pression dans la préforme 7 marque un palier de 10bars pendant par exemple 0,05s à la fin de l'étape de présoufflage 106.

Puis, une étape de soufflage 108 s'enchaîne et on ferme la vanne 35 et on ouvre d'une part la vanne 37 et d'autre part la vanne 53 pour permettre au gaz de soufflage de plaquer la préforme 7 contre la paroi 5 du moule 3 à une seconde pression de 40bars environ.

Préférentiellement, l'ouverture de la vanne 53 a lieu avant que le piston soit arrivé à sa position de fin de course représentée à la figure 4A à la pression supérieure de 50 bars.

En effet, le piston 47 est encore en mouvement pour comprimer le volume de la chambre 43 et pour faire entrer le gaz de soufflage dans la préforme 7. On appréciera que le volume de gaz devant être fourni par le compresseur est fortement réduit grâce au dispositif 17 selon l'invention et consiste essentiellement à l'appoint pour pallier la quantité de gaz perdu lors du dégazage.

Après une montée, la pression de soufflage arrive à un palier d'une durée de 0,6s environ.

Puis, on enchaîne une étape de dégazage 110. On se rappelle que le piston 47 est dans la position illustrée sur la figure 4A et que le volume de la chambre 43 est minimal, mais pas zéro.

Avant de débuter l'étape de dégazage 110, on ferme la vanne 37 ainsi que la vanne 53. Le gaz récupéré résiduel dans la chambre 43 possède encore une pression de 40 bars environ.

Puis, on ouvre la vanne 57 de sorte le gaz de soufflage est récupéré dans la chambre 45 pendant une phase 112. Le volume de 12 litres maximum des chambres est choisi de manière que la pression d'équilibre lors de cette première phase de dégazage / récupération soit d'environ 12 bars.

Lorsque cette pression d'équilibre est atteinte, on ferme la vanne 57 également de sorte que le gaz récupéré est emprisonné dans la chambre 45 et on ouvre la vanne 39 pour réaliser le dégazage final du gaz (phase 114) qui est encore dans le moule 3 jusqu'à la pression atmosphérique par l'intermédiaire du silencieux 41.

Ceci permet par la suite lors d'une étape 116 de sortir le corps creux fini du moule et de replacer une nouvelle préforme 7 dans le moule et de refermer ce dernier pour recommencer le cycle de fabrication.

Lors de ces opérations d'ouverture du moule, l'évacuation du corps creux fini, le transfert d'une nouvelle préforme et la fermeture du moule, on comprime le gaz récupéré dans la chambre 45.

Avantageusement, cette compression est amorcée par le gaz résiduel à 40 bars dans la chambre 43 qui va soutenir le moteur dans sa montée en puissance, en particulier lors de sa phase d'accélération. Le piston 47 est donc déplacé selon les positions présentées sur les figures 4B, 4C pour arriver à la position 4D (La position 4D pour la chambre 45 correspond à la position de la figure 4A pour la chambre 43).

Cette façon d'utiliser le gaz résiduel de la chambre 43 pour amorcer la compression d'un volume de gaz à la seconde pression en agissant sur le piston 47 lors d'une phase d'accélération 118 de manière à accompagner dans son effort de compression une unité motorisée est très avantageuse, car elle permet de réduire davantage la consommation énergétique de l'installation et de réduire les contraintes subies par l'unité motorisée.

Puis on passe à nouveau à une étape de présoufflage 106 comme indiqué ci-dessus, mais pour l'étape de soufflage 108, le gaz du dispositif 17 va provenir pour ce nouveau cycle de la chambre 45.

On comprend donc que les chambres 43 et 45 sont utilisées en alternance pour la récupération du gaz de soufflage et pour la compression de ce dernier pour être réinjecté dans le moule 3 lors de l'étape de soufflage 108.

Ainsi, on permet une réduction significative de la consommation énergétique de la présente installation.

A titre d'exemple, le Demandeur a calculé que l'économie d'air de soufflage s'élève dans toutes la configuration pratiquement à au moins 50%, pour certaines configurations (fabrication de bouteilles de 0,51 dans deux cavités d'un moule) cette économie peut permettre une réduction de 80% de la consommation d'air, ceci avec une cadence de 1600 bouteilles par cavité par heure. En termes énergétiques, l'économie d'énergie varie entre 30 et 60 kW/h.

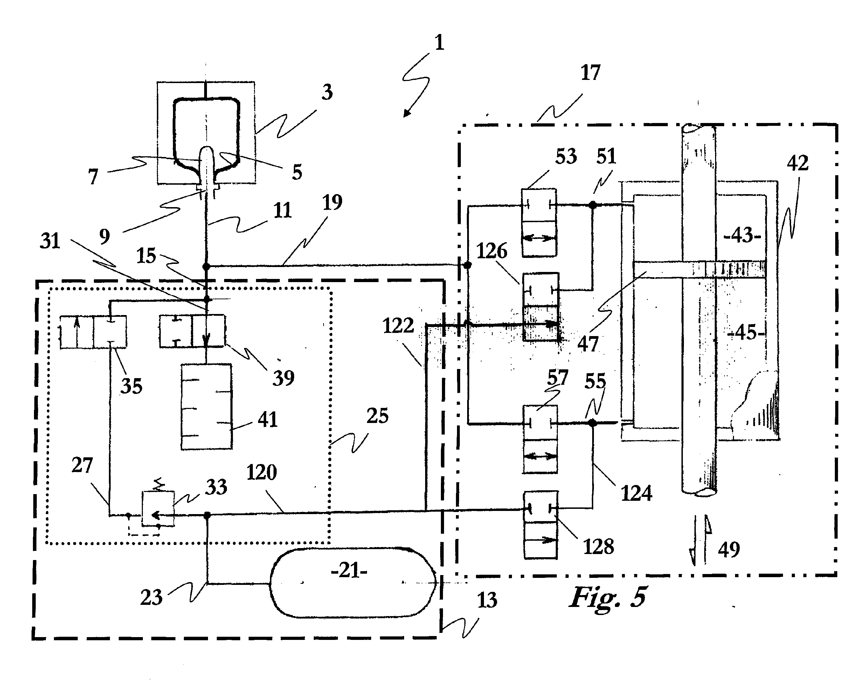

La figure 5 présente un autre mode de réalisation d'une installation de fabrication par soufflage d'un corps creux selon l'invention. La différence essentielle réside dans le fait que le compresseur 21 est un compresseur standard capable de délivrer une pression en sortie de 15bars environ. Ces compresseurs « 15bars » sont beaucoup moins cher en achat et entretien que les compresseurs « 40bars » et aussi moins soumis à l'usure.

Dans l'installation de la figure 5, l'étape de soufflage 108 est entièrement assurée par le dispositif 17 de récupération du gaz de soufflage. C'est pourquoi l'unité 25 de régulation des pressions ne comporte plus que la conduite 27 de présoufflage ainsi que la conduite 31 de dégazage.

Pour pallier aux pertes de gaz de soufflage liées essentiellement au dégazage, le compresseur 21 est relié via une conduite 120 se divisant en deux branches référencées 122 et 124 respectivement à la chambre 43 d'une part et à la chambre 45 d'autre part. Dans la branche 122 est disposée une vanne de régulation 126 et dans la branche 124 une vanne de régulation 128.

Le fonctionnement du mode de réalisation de l'installation de la figure 5 est très proche de celui de la figure 1 expliqué en référence à la figure 3.

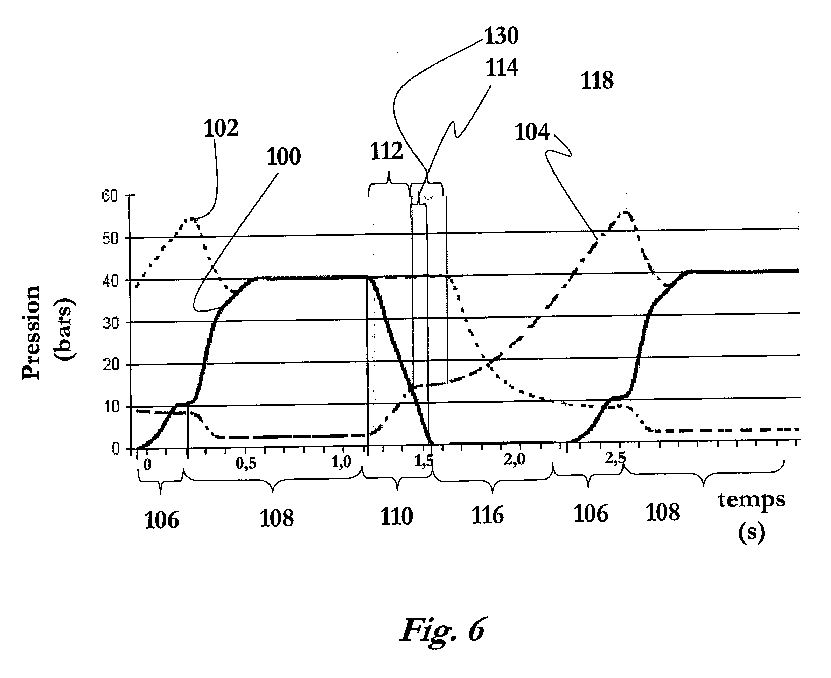

En effet, si on se réfère maintenant à la figure 6 montrant un cycle de fabrication d'un corps creux réalisé avec l'installation de la figure 5, l'étape de présoufflage 106 se déroule de façon identique à celle de la figure 3 et lors de cette étape de présoufflage, on comprime à l'aide de l'unité motrice 63 (avec le moteur non représenté) du dispositif 17 le gaz de soufflage dans la chambre 43 à une pression plus élevée que celle nécessaire pour le soufflage, c'est-à-dire supérieure à 40bars, de préférence comprise entre 45 bars et 54 bars (sur le diagramme, la pression représenté est entre 52bars et 53 bars environ).

Puis, on ferme la vanne 35 pour terminer l'étape de présoufflage 106 et on ouvre la vanne 53 pour réaliser l'étape de soufflage 108 entièrement avec le gaz contenu dans la chambre 43. En effet, les volumes minimaux et maximaux des chambres 43 et 45 sont pour ce cas adaptés pour contenir une quantité de gaz de soufflage suffisante pour réaliser entièrement l'étape de soufflage 108 à 40 bars environ.

Par la suite, à la fin de l'étape de soufflage 108, on ferme la vanne 53 et on ouvre la vanne 57 pour récupérer le gaz de soufflage jusqu'à une pression de 10bars à 12 bars environ, et on ferme la vanne 57 avant d'ouvrir la vanne 39 pour réaliser le dégazage final vers la pression atmosphérique.

Lorsque la vanne 57 est fermée, on ouvre pendant une étape 130 la vanne 128 de manière à faire l'appoint en gaz dans la chambre 45 jusqu'à une pression de 15 bars environ (c'est-à-dire la pression délivrée par e compresseur 45). Lors que cette étape d'appoint 130 est terminée, on referme la vanne 128 à nouveau et la compression du gaz de soufflage dans la chambre 45 est amorcée de la même manière que celle décrite en relation avec la figure 3.

On comprend donc que la grande différence de ce mode de réalisation réside dans le compresseur de 15bars et dans l'ajout d'une étape intermédiaire 130 pour faire l'appoint en gaz de soufflage.

La Demanderesse a constaté une économie d'air à peu près équivalente à celle de l'installation de la figure 1. Mais il est à noter que les investissements concernant le compresseur et sa maintenance sont bien plus faibles.

On comprend donc que les installations selon l'invention permettent de réaliser de grandes économies en énergie, en investissements et en besoin de maintenance.

## Revendications

1. Procédé de fabrication par soufflage de corps creux en matière plastique dans un moule à partir d'une préforme comportant les étapes suivantes :
- lors d'une première étape de présoufflage (106), on insuffle du gaz dans la préforme à une première pression,
- lors d'une seconde étape de soufflage (108), on insuffle du gaz dans la préforme (7) à une seconde pression supérieure à la première pression pour obtenir le corps creux, et
- lors d'une troisième étape de dégazage (110) du corps creux, on récupère le gaz qui a été soufflé dans l'ébauche (7) à la seconde pression lors de la seconde étape de soufflage,
**caractérisé en ce que** l'on comprime le gaz récupéré en vue de son utilisation lors d'une étape de soufflage (108) ultérieure.

2. Procédé selon la revendication 1, **caractérisé en ce que** le gaz récupéré et comprimé est utilisé pour amorcer la compression d'un volume de gaz à la seconde pression en agissant sur un piston (47) d'un dispositif (17) de récupération de gaz de soufflage lors d'une phase d'accélération de manière à accompagner dans une phase initiale une unité motorisée du dispositif de récupération dans son effort de compression.

3. Procédé selon l'une quelconque des revendications 1 à 2, **caractérisé en ce que** l'on comprime le gaz récupéré à une pression supérieure à la seconde pression de soufflage, de préférence à une pression supérieure à 40 bars, préférentiellement comprise entre 45bars et 54bars, avant de l'utiliser pour une nouvelle étape de soufflage (108).

4. Procédé selon l'une quelconque des revendications précédentes, **caractérisé en ce qu'**avant la compression du gaz récupéré, on fait l'appoint en gaz depuis une source de gaz comprimé (21) pour obtenir la quantité de gaz nécessaire pour réaliser une phase de soufflage.

5. Procédé selon la revendication 4, **caractérisé en ce que** la source de gaz comprimé pour faire l'appoint fournit un gaz à une pression égale ou supérieure d'au plus de 10 bars à la pression nécessaire pour l'étape de présoufflage, de préférence à une pression comprise entre 10 bars et 15 bars.

6. Dispositif de récupération de gaz de soufflage (17) destiné à être monté dans un circuit de circulation de gaz de présoufflage / soufflage d'une installation (1) de fabrication par soufflage de corps creux en matière plastique dans un moule à partir d'une préforme (7), **caractérisé en ce qu'**il comprend une première (43) et une seconde (45) chambres de récupération / compression séparées par un piston mobile (47) et apte à être entraîné par une unité motorisée (72), chaque chambre (43,45) étant destinée à être reliée via une conduite (19, 11) de circulation de gaz au moule (3) pour permettre en alternance dans les deux chambres d'une part la récupération du gaz de soufflage lors de l'étape de dégazage (110) et d'autre part la compression du gaz récupéré en vue de son utilisation lors d'une étape de soufflage (108).

7. Dispositif selon la revendication 6, **caractérisé en ce que** les chambres (43, 45) de récupération / compression sont formées entre une paroi externe d'un tube intérieur (67) mobile en translation et portant le piston (47) de forme annulaire et la paroi interne (69) d'un tube extérieur.

8. Dispositif selon la revendication 7, **caractérisé en ce que** l'unité motorisée (72) comprend un mécanisme à vis sans fin (73) entraînant ledit tube intérieur (67).

9. Dispositif selon la revendication 8, **caractérisé en ce que** ledit mécanisme à vis sans fin comprend une partie filetée (75) portée par ledit tube intérieur et en prise avec une vis sans fin (77) reliée en entraînement avec un moteur.

10. Installation de fabrication par soufflage de corps creux en matière plastique dans un moule à partir d'une préforme, **caractérisé en ce qu'**il comprend un dispositif selon l'une quelconque des revendications 6 à 9.

11. Installation selon la revendication 10, **caractérisé en ce qu'**il comprend une source de gaz comprimé fournissant un gaz à une pression inférieure à la pression nécessaire pour l'étape de soufflage, de préférence à une pression comprise entre 10 bars et 15 bars en vue de réaliser d'une part l'étape de présoufflage et d'autre part pour faire l'appoint en quantité de gaz du dispositif de récupération de gaz de soufflage.
